Europäisches Patentamt

European Patent Office

Office européen des brevets

(19)

(11) Publication number:

# 0 049 160
A2

(12) **EUROPEAN PATENT APPLICATION**

(21) Application number: **81304503.6**

(51) Int. Cl.³: **G 06 F 3/04**

(22) Date of filing: **29.09.81**

(30) Priority: **29.09.80 US 191626**

(43) Date of publication of application: **07.04.82**
**Bulletin 82/14**

(84) Designated Contracting States: **BE DE FR GB IT NL**

(71) Applicant: **Honeywell Information Systems Inc.,**
**200 Smith Street, Waltham Massachusetts 02154 (US)**

(72) Inventor: **Yu, Kin C., 32 Westwood Street, Burlington**
**Massachusetts 02154 (US)**
Inventor: **Goss, Gary J., 93 Harris Street, Acton**
**Massachusetts 01720 (US)**

(74) Representative: **Harman, Michael Godfrey et al,**
**Honeywell Control Systems Ltd. Patent Department**
**Charles Square, Bracknell Berks RG12 1EB (GB)**

(54) Channel timing control in communication controller.

(57) A data processing system includes a central processing unit, a main memory, and a communication subsystem servicing a number of communication lines. The communication subsystem includes a free running timer 32, a line microprocessor 56 for communicating with the communication lines 17 and a shared memory 44, and an I/O microprocessor 36 for communicating with the shared memory 44 and the central processing unit and main memory (via 16). The line microprocessor 56, desiring the communicate with a specified communication line after a predetermined time delay, loads a first mailbox in shared memory 44 with a binary number indicative of the predetermined time delay. The I/O microprocessor 56 adds the output of the free running timer 32 to the binary number, stores the result in a location in a random access memory 40, and periodically compares the result against the free running timer output. The I/O microprocessor loads a second mailbox (in 44) with a control character when the results of the comarison indicate that the predetermined time delay is accomplished. The line microprocessor responds to the information in the second mailbox to communicate with the specified communication line.

EP 0 049 160 A2

- 1 -

## CHANNEL TIMING CONTROL IN COMMUNICATION CONTROLLER

The present invention relates to data processing systems and more particularly to timing apparatus in a communication subsystem for indicating required time intervals.

In many sophisticated data processing systems, it is important to be able to efficiently control the timing of events to insure optimum utilization of the resources. For example, a central processor normally employs an interval timer which enables it to keep track of the time of day and to interrupt periodically as required. Thus, this allows for the performance of functions such as the timeout of events, the polling of communication networks on a regular basis and the time of day recording.

In many prior art systems, it is incumbent upon the processor to respond to a timeout condition within a maximum time period after receipt of a timer interrupt. Waiting can result in the readout of invalid information. Accordingly, the processor is required to interrupt normal processing to respond immediately to each timer produced interrupt.

A known system includes a timer unit including a preset register for storing a processor established count for defining a time interval, an interval counter coupled to the preset register for receiving a count therefrom, and a rollover counter coupled to the interval counter. The timer unit upon detecting each completion of the time interval specified by the preset register generates an interrupt request to a priority network. This timing system requires a preset register and a number of counters. Also, a single processor must initiate the count and also respond to a single interrupt signal.

The hardware required can be reduced by the use of a microprocessor controlling communication lines through the use of

- 2 -

channel control blocks stored in a memory. Such a system, however, is limiting the throughput by restricting the number of communication lines that could be processed.

It is an object of the invention to provide a communication subsystem with a timing system requiring less processor overload.

Accordingly the present invention provides a communication subsystem for transferring data bytes comprising a plurality of communication channels and a communication multiplexer for controlling the transfer of the data bytes and for generating a plurality of binary count signals indicative of timeout conditions for the communication channels, characterized in that the communication multiplexer comprises:

a free running timer for generating a sequence of binary timing signals;

a line microprocessor for generating a count signal for a communication channel and an interrupt signal; and

an I/O microprocessor responsive to the interrupt signal to add count to the signal to the timing signal, store the resulting sum in an I/O random access memory, and repeatedly compare the timing signals with the stored sum and generating a flag signal when a timing signal is equal to or greater than the stored sum; the line microprocessor being responsive to a flag signal to generate a predetermined sequence of operations in accordance with the timeout condition.

A communication controller embodying the invention will now be described, by way of example, with reference to the drawings, in which:

Figure 1 is block diagram of the communication controller.

BAD ORIGINAL

Figure 2 is a logic diagram of the free running timer 32.

Figure 3 is a block diagram of the free running timer operation in the communication subsystem.

## INTRODUCTORY SUMMARY

A data processing system includes a central processing unit, a main memory and a communication subsystem, all coupled to a system bus. The communication subsystem includes a number of devices coupled to a communication controller through a line adapter via a communication channel on bus 17 identified by a channel number.

The communication subsystem includes a line microprocessor 36 for communicating with the communication channels, a shared memory 44, and I/O microprocessor 56 for communicating via the shared memory and the system bus 16 with the central processing unit and the main memory, and a free running timer 32.

A communication channel control program (CCP) is stored in a random access memory 60. The CCP controls the communication channel activity in conjunction with the line microprocessor. The CCP may indicate to the line microprocessor 56 to call for a predetermined CCP routine to query a predetermined channel number after a preset period of time. The line microprocessor 56 will store a binary count indicating the preset period of time and an action code indicating the action the I/O microprocessor 36 is to take in a "line to I/O microprocessor" mailbox in shared memory.

The I/O microprocessor is then interrupted by the line microprocessor and reads the information stored in the "line to I/O microprocessor" mailbox. The I/O microprocessor adds the present time of the free running timer to the binary count read from the "line to I/O microprocessor" mailbox and stores the time delay result in a random access memory location associated with the channel number also read from the mailbox. The I/O microprocessor then sets a timer running flag indicating that the free running timer is operative for this channel and releases the "line to I/O microprocessor" mailbox.

The I/O microprocessor in its background mode compares the present time of the free running timer against the time delay result for each channel number operating in a free running timer mode and resets the timer running flag when the value of the free running timer output is equal to or greater than the time delay result. The I/O microprocessor also stores the timer action code in a command byte stored in the random access memory in an address location associated with this channel number.

When the value of the free running timer output is equal to or greater than the time delay result, the next time the I/O microprocessor queries this channel number a test of the command byte indicates a timer action code. This results in the I/O microprocessor storing the channel number, a command code and a reason code indicating the timeout condition in the "I/O to line microprocessor" mailbox address locations in shared memory. The line microprocessor queries the "I/O to line microprocessor" mailbox and calls for the predetermined CCP routine.

The line microprocessor may set up a number of time delays for each communication channel. The I/O microprocessor will process each of the time delays and indicate to the line microprocessor when these time delays occur for each communication channel.

- 5 -

## DETAILED DESCRIPTION

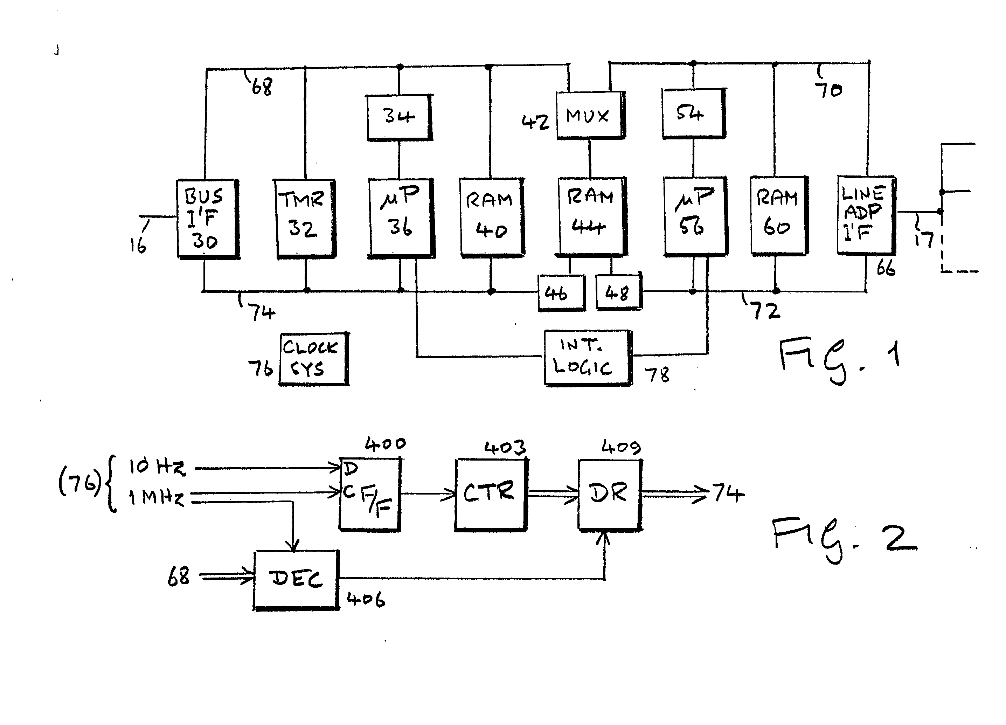

Figure 1 is a block diagram of the communication controller. This is coupled via a system bus 16 to a CPU and a main memory (not shown), and via a line adapter bus 17 to a plurality of line adapters (not shown) and thence to a plurality of devices (not shown) such as CRT's, modems, dialling units, and line printers.

The controller itself consists of an I/O side including an I/O microprocessor 36 and a line side including a line microprocessor 56. Microprocessors 36 and 56 are coupled to an I/O data bus 74 and a line data bus 72 respectively, and via respective I/O paging logic unit 34 and line paging logic unit 54 to an I/O address bus 68 and a line address bus 70 respectively. Each microprocessor is controlled by a respective PROM (not shown) coupled between the associated address and data buses, and each has a respective RAM (random access memory), 40 and 60, similarly coupled as shown. The line adapter bus 17 is coupled to the line address bus 70 and the line data bus 72 by a line adapter interface 66, and the system bus 16 is coupled to the I/O address bus 68 and the I/O data bus 74 by a bus interface 30.

The two sides of the controller are coupled together by means of a shared RAM 44, which is coupled to the two address buses by a multiplexer 42 and to the two data buses by two transceivers 46 and 48 as shown.

A clock system 76 provides clock signals to the whole of the controller, and an interrupt logic unit 78 detects various conditions and generates interrupt signals to the two microprocessors. A free running timer 32 is coupled between the I/O address bus 68 and the I/O data bus 74. Other units not shown, such as a pause timer and a priority scan unit, are included in the controller.

The two sides of the controller, the I/O side and the line side, communicate with each other by means of the shared RAM 44. This contains a plurality of CCB's (channel control blocks) for the various channels fed by the line adapter interface 17, LCT's (line control tables) which control the devices coupled via the line adapters to the line adapter interface 17, and 3 mailboxes. Mailbox 1 is used for block mode commands from the CPU via the I/O microprocessor 36 to the line microprocessor 56. Mailbox 2 is used for I/O microprocessor 36 commands to line microprocessor 56. Mailbox 3 is used for line microprocessor 56 commands to I/O microprocessor 36.

This last mailbox, mailbox 3, consists of 4 words, and 3 are : Word 0 for command bits: load, store, get next block interrupt CPU, back space 1 character, timer 32, initialize, back a line, and special timer. Word 1 contains a flag bit, a 4-bit line (channel) number, and a receive/transmit bit. Word 2 contains a data byte (8 bits). This general system is described at greater length in our copending application N°81304501.0 I/O Data Processing System.

Figure 2 is a logic diagram of free running timer 32. Clock system 76 generates a free running square wave signal alternately at 1 for 50 ms and at 0 for 50 ms which is applied to the D terminal of a flip-flop 400. A clock signal which rises every 500 ns is applied to the clock terminal. The output of flip-flop 400 rises approximately every 100 ms and is fed to a counter of 403.

A decoder 406 is enabled when I/O paging logic 34 receives address signal $00FC_{16}$. When a clocking signal fed to it is at 0,

its output enables driver 409.    This places the output of counter 402 on the I/O data bus 74 for storage in work RAM 40 at address location $XXFC_{16}$.    The I/O paging logic 34 generates an address location $XXFC_{16}$ for each channel number for storing the output of counter 403.

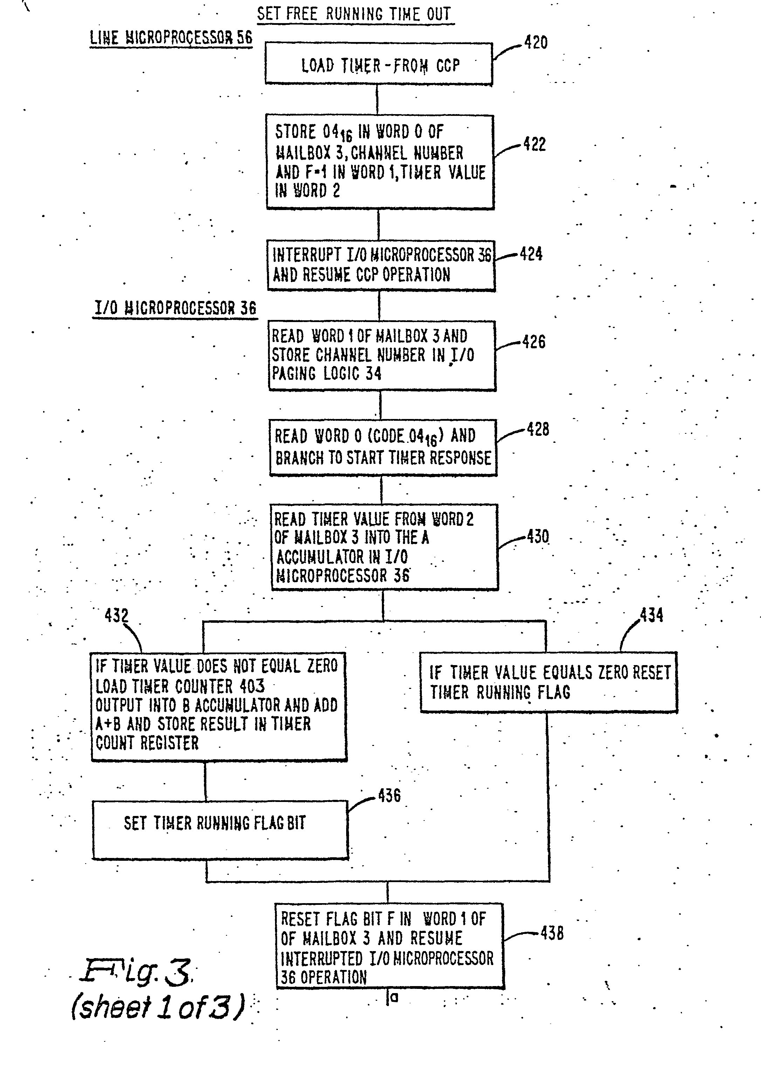

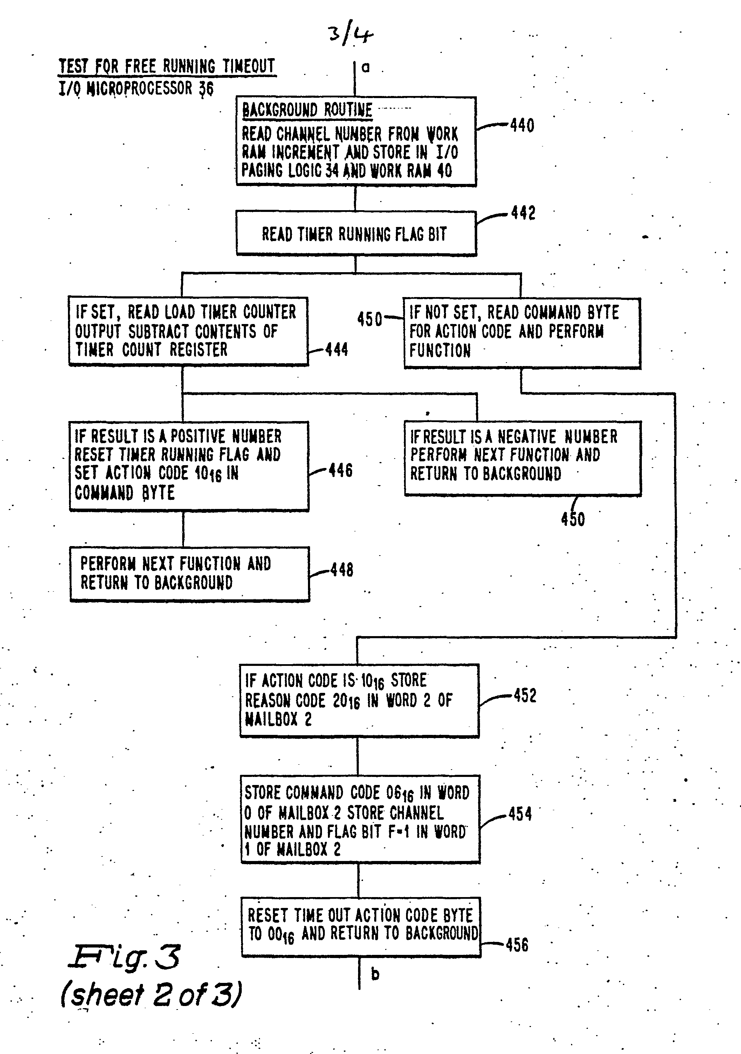

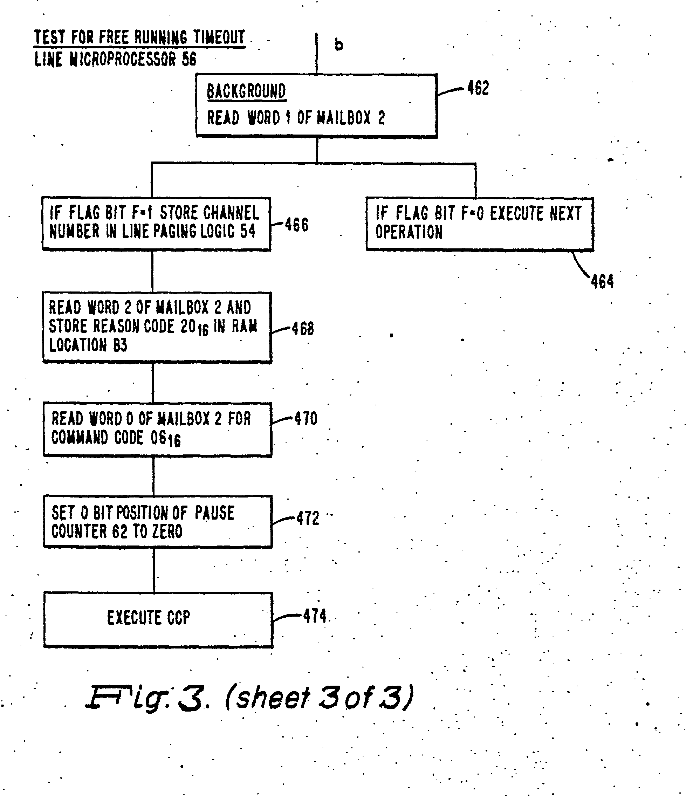

Figure 3 is a flow chart of the free running timer 32 operation.    The line microprocessor 56 controls the receiving of a binary value from a CCP and executing a load timer operation. The binary value is a measure of the time after which the line microprocessor 56 will perform a predetermined operation, typically a scan of a communication channel.

A CCP will call for a load free running timer 32 operation which the line microprocessor 56 will receive (block 420) from RAM 60.

Under line microprocessor 56 control, mailbox 3 in shared memory 44 is loaded (block 422) as follows.    Word 0 is loaded with an $04_{16}$ command code indicating a timer operation.    Word 1 is loaded with the channel number of the communication channel to be queried and the flag bit F is set.    Word 2 is loaded with the binary value.    This binary value is ZERO if the I/O microprocessor 36 is to stop the timer operation for this communication channel.

In block 424, the I/O microprocessor 36 is interrupted and the line microprocessor 56 resumes its CCP operation.    The line microprocessor 56 generates an address $00F1_{16}$.

A decoder in the interrupt logic 78 is responsive to the address $F1_{16}$ to generate a signal which sets a flip-flop in logic 78 and sends an interrupt signal to I/O microprocessor 36, which is responsive to the interrupt signal to generate interrupt vector addresses $FFF8_{16}$ and $FFF9_{16}$.    The contents of address

locations $FFF8_{16}$ and $FFF9_{16}$ in the PROM controlling microprocessor 36 point to the IRQ Handler Routine in the PROM which (block 426) reads word 1 of mailbox 3 and stores the channel number in a register (not shown) in I/O paging logic 34. Word O of mailbox 3 is read and the I/O microprocessor 36 is responsive to the action code $04_{16}$ to branch to a start timer operation (block 428).

In block 430, the timer value is read from word 2 of mailbox 3 and stored in the A accumulator of I/O microprocessor 36. If the timer value in word 2 was not ZERO, then (block 432) the output of counter 403 is loaded into the B accumulator of I/O microprocessor 36 by generating address $OOFC_{16}$ over I/O address bus 68. This causes the output signal of decoder 406 to enable drivers 409 and the count is transferred to the B accumulator of I/O microprocessor 36 over I/O data bus 74. The contents of the A accumulator and B accumulator are added and the result is stored in a timer count location in work RAM 40. The timer running flag word for the channel number stored in word 1 is read from work RAM 40, the timer running flag bit is set (block 436).

If the timer value in word 2 of mailbox 3 is binary ZERO, then the timer operation for this channel number is turned off (block 434) by resetting the timer running flag bit for this channel number in work RAM 40.

In block 438, the flag bit F is reset in word 1 of mailbox 3 and the I/O microprocessor 36 resumes its interrupted operation. The flag bit F = O indicates to line microprocessor 56 that mailbox 3 is available for use.

The I/O microprocessor 36 in a background mode (block 440) reads a channel number stored in a scan channel location in RAM 40, increments the channel number and stores the incremented channel number into a register (not shown) in I/O paging logic 34.

In block 442, the timer running flag word is read from work RAM 40 and the flag bit tested. If the timer running flag bit is set, indicating that this channel number is in a free running timer 32 mode, then (block 444) the I/O microprocessor 36 generates an address $OOFC_{16}$ which loads the output of counters 402 and 404 into the A accumulator of I/O microprocessor 36. The contents of the timer count location in work RAM 40 is subtracted from the contents of the A accumulator and the sign bit of the result tested. If the result is a negative number (block 450), the contents of the timer count location is greater than the counter 403 output and the I/O microprocessor 36 executes the remaining functions of the channel before returning to the background mode for the next channel.

If the result is a positive number (block 440), indicating a timeout condition, the timer running flag is reset and an action code of $10_{16}$ is stored in a command byte location in work RAM 40. In block 448, the I/O microprocessor 36 performs the remaining functions and returns to the background mode.

If in block 442 the timer running byte is not set, then (block 450) the I/O microprocessor 36 reads the contents of the command byte register in work RAM 40 for the action code. If the action code is $10_{16}$, indicating that a timeout occurred the previous time this channel number was processed by the I/O microprocessor 36, then (block 452) the reason code $20_{16}$ is stored in word 2 of mailbox 2 indicating a timer operation. The channel number and flag bit, F = 1, are stored in word 1 of mailbox 2. In block 456, the timeout action code is reset in the command byte of work RAM 40 and the I/O microprocessor 36 returns to the background mode.

- 10 -

The line microprocessor 56 in the background mode (block 462) reads word 1 of mailbox 2. If the flag bit F is not set, indicating that the I/O microprocessor 36 has no message for the line microprocessor 56, then the line microprocessor 56 continues in the background mode.

If the flag bit of word 1 of mailbox 2 is set (block 466), indicating that the I/O microprocessor 36 has a message, then the channel number is stored in the channel number register (not shown) in line paging logic 54. Word 2 of mailbox 2 is read (block 468) and the reason code $20_{16}$ stored in the reason code location in work RAM 52. Word 0 of mailbox 2 is stored (block 470) for the command code. If the command code is $06_{16}$, indicating a start I/O operation from the free running timer 32, then (block 472) the pause timer 62 is reset to ZERO and (block 474) the CCP which is called for by the free running timer 32 timeout is executed.

CLAIMS

1. A communication subsystem for transferring data bytes comprising a plurality of communication channels and a communication multiplexer for controlling the transfer of the data bytes and for generating a plurality of binary count signals indicative of timeout conditions for the communication channels, characterized in that the communication multiplexer comprises :

a free running timer (32) for generating a sequence of binary timing signals;

a line microprocessor (56) for generating a count signal for a communication channel and an interrupt signal; and

an I/O microprocessor (36) responsive to the interrupt signal to add the count signal to the timing signal, store the resulting sum in an I/O random access memory (40) and repeatedly compare the timing signals with the stored sum and generating a flag signal when a timing signal is equal to or greater than the stored sum;

the line microprocessor being responsive to a flag signal to generate a predetermined sequence of operations in accordance with the timeout condition.

2. The system of claim 1 characterized in that the free running timer means comprises:

a free running clock (76) for generating a serial sequence of clock signals;

counting means (403) responsive to the clock signals for generating the timing signals;

decoder means (406) responsive to predetermined address signals from the I/O microprocessor for generating a store signal; and driver means (409) responsive to the store signal for transferring the timing signals on an I/O data bus (68).

3. The system of claim 2 characterized in that the microprocessor had associated therewith:

a line random access memory (40) for storing instructions representative of a channel control program (CCP), the line microprocessor being responsive to said instructions for generating the count signal for transfer to the I/O microprocessor, and

interrupt means (78) responsive to a predetermined set of address signals from the line microprocessor for generating the interrupt signal.

4. A system according to any previous claim, characterized in that the line microprocessor (56) and the I/O microprocessor (36) are coupled to a shared memory (44) and the I/O microprocessor (36) stores the channel number of the relevant channel, a command code indicative of the action the line microprocessor will take and a reason code indicative of the timeout condition in the shared memory (44) when the flag signal is generated, the line microprocessor (56) being responsive to the command code and the reason code to generate the predetermined sequence of operations.

5. The system of claim 4 characterized in that the shared memory (44) comprises a first mailbox for storing the count signal, the action code and the channel number, and a second mailbox for storing the command code, the reason code and the channel number.

BUS I'F 30

TMR 32

34

µP 36

RAM 40

42 MUX

RAM 44

54

µP 56

RAM 60

LINE ADP I'F 66

16

68

70

17

74

46 48

72

76 CLOCK SYS

INT. LOGIC 78

FIG. 1

(76) { 10 Hz, 1 MHz }

D
C F/F 400

CTR 403

DR 409

74

68

DEC 406

FIG. 2

0049160

SET FREE RUNNING TIME OUT

LINE MICROPROCESSOR 56

LOAD TIMER - FROM CCP — 420

STORE $04_{16}$ IN WORD 0 OF MAILBOX 3, CHANNEL NUMBER AND F=1 IN WORD 1, TIMER VALUE IN WORD 2 — 422

INTERRUPT I/O MICROPROCESSOR 36 AND RESUME CCP OPERATION — 424

I/O MICROPROCESSOR 36

READ WORD 1 OF MAILBOX 3 AND STORE CHANNEL NUMBER IN I/O PAGING LOGIC 34 — 426

READ WORD 0 (CODE $04_{16}$) AND BRANCH TO START TIMER RESPONSE — 428

READ TIMER VALUE FROM WORD 2 OF MAILBOX 3 INTO THE A ACCUMULATOR IN I/O MICROPROCESSOR 36 — 430

432

IF TIMER VALUE DOES NOT EQUAL ZERO LOAD TIMER COUNTER 403 OUTPUT INTO B ACCUMULATOR AND ADD A+B AND STORE RESULT IN TIMER COUNT REGISTER

434

IF TIMER VALUE EQUALS ZERO RESET TIMER RUNNING FLAG

SET TIMER RUNNING FLAG BIT — 436

RESET FLAG BIT F IN WORD 1 OF OF MAILBOX 3 AND RESUME INTERRUPTED I/O MICROPROCESSOR 36 OPERATION — 438

Fig. 3.
(sheet 1 of 3)

TEST FOR FREE RUNNING TIMEOUT
I/O MICROPROCESSOR 36

a

**BACKGROUND ROUTINE**
READ CHANNEL NUMBER FROM WORK RAM INCREMENT AND STORE IN I/O PAGING LOGIC 34 AND WORK RAM 40 — 440

READ TIMER RUNNING FLAG BIT — 442

IF SET, READ LOAD TIMER COUNTER OUTPUT SUBTRACT CONTENTS OF TIMER COUNT REGISTER — 444

450 — IF NOT SET, READ COMMAND BYTE FOR ACTION CODE AND PERFORM FUNCTION

IF RESULT IS A POSITIVE NUMBER RESET TIMER RUNNING FLAG AND SET ACTION CODE $10_{16}$ IN COMMAND BYTE — 446

IF RESULT IS A NEGATIVE NUMBER PERFORM NEXT FUNCTION AND RETURN TO BACKGROUND

450

PERFORM NEXT FUNCTION AND RETURN TO BACKGROUND — 448

IF ACTION CODE IS $10_{16}$ STORE REASON CODE $20_{16}$ IN WORD 2 OF MAILBOX 2 — 452

STORE COMMAND CODE $06_{16}$ IN WORD 0 OF MAILBOX 2 STORE CHANNEL NUMBER AND FLAG BIT F=1 IN WORD 1 OF MAILBOX 2 — 454

RESET TIME OUT ACTION CODE BYTE TO $00_{16}$ AND RETURN TO BACKGROUND — 456

b

*Fig. 3*
*(sheet 2 of 3)*

TEST FOR FREE RUNNING TIMEOUT
LINE MICROPROCESSOR 56

b

BACKGROUND
READ WORD 1 OF MAILBOX 2 ——462

IF FLAG BIT F=1 STORE CHANNEL
NUMBER IN LINE PAGING LOGIC 54 ——466

IF FLAG BIT F=0 EXECUTE NEXT
OPERATION

——464

READ WORD 2 OF MAILBOX 2 AND
STORE REASON CODE $20_{16}$ IN RAM
LOCATION B3 ——468

READ WORD 0 OF MAILBOX 2 FOR
COMMAND CODE $06_{16}$ ——470

SET 0 BIT POSITION OF PAUSE
COUNTER 62 TO ZERO ——472

EXECUTE CCP ——474

Fig. 3. (sheet 3 of 3)